(19)

Europäisches
Patentamt
European
Patent Office
Office européen
des brevets

(11) **EP 2 557 133 B1**

(12) **EUROPEAN PATENT SPECIFICATION**

(45) Date of publication and mention
of the grant of the patent:
**16.11.2016 Bulletin 2016/46**

(51) Int Cl.:
*C09J 7/02* (2006.01)   *C08K 5/12* (2006.01)

(21) Application number: **12177748.6**

(22) Date of filing: **25.07.2012**

(54) **Method for providing PVC structures for adhesive applications**

Verfahren zur Bereitstellung von PVC-Strukturen für Klebeanwendungen

Procédé de Préparation des structures en PVC pour applications adhésives

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2011 EP 11290367**

(43) Date of publication of application:
**13.02.2013 Bulletin 2013/07**

(73) Proprietor: **Rohm and Haas Company
Philadelphia, PA 19106-2399 (US)**

(72) Inventors:
• **Cisowski, Natacha
06200 Nice (FR)**
• **Griffith, Jr., William B.
North Wales, PA Pennsylvania 19454 (US)**

• **Uhl, Isabelle
06130 Grasse (FR)**

(74) Representative: **Houghton, Mark Phillip et al
Patent Outsourcing Limited
1 King Street
Bakewell, Derbyshire DE45 1DZ (GB)**

(56) References cited:
**WO-A2-2005/039870     US-A1- 2002 132 966**

• **"1,2-Cyclohexane dicarboxylic acid diisononyl
ester", Wikipedia The free encyclopedia, 12
October 2011 (2011-10-12), pages 1-4,
XP055015285, Retrieved from the Internet:
URL:http://en.wikipedia.org/w/index.php?ti
tle=Special:Book&bookcmd=download&collecti
on_id=01c0a4c8b0c8292f&writer=rl&return_to
=1,2-Cyclohexane dicarboxylic acid diisononyl
ester [retrieved on 2011-12-21]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to a method for providing a plasticized polyvinyl chloride ("PVC") structure having reduced plasticizer migration into a pressure sensitive adhesive layer.

Plasticizers are frequently added to PVC substrates in order to make this hard, brittle material softer and more flexible. Substrates such as, for example, PVC graphic films include substantial amounts of plasticizer, typically about 25% plasticizer, by weight based on PVC weight, which potentially can migrate into any coating or adhesive coated onto the substrate. Such migration leads to an undesirable shrinkage of the PVC film along with poorer coating or adhesive performance. Recent emphasis on the replacement of traditional phthalate plasticizers for PVC has created a need for reducing the migration of suitable plasticizers such as, for example, DINCH (1,2-cyclohexane dicarboxylic acid di-isononyl ester) plasticizers.

US Patent No. 6,995,207 discloses a plasticizer resistant crosslinked pressure sensitive composition useful for application to plasticizer containing vinyl films.

US Patent No.5,993,961 discloses a multilayer adhesive construction that includes a pressure sensitive adhesive barrier layer on a facestock with a second pressure sensitive adhesive layer on the barrier layer.

WO 2005/039870 discloses a composite construction containing a barrier layer.

Improvements in the performance of plasticized PVC structures bearing pressure sensitive adhesive layers are still sought.

The present invention provides a method for providing a structure comprising:

a) providing a polyvinyl chloride ("PVC") support, said support comprising from 5% to 40% by weight, based on the weight of PVC, DINCH (1,2-cyclohexane dicarboxylic acid di-isononyl ester) plasticizer; said support having at least one surface;

b) applying to said surface an aqueous crosslinkable polymeric coating comprising an uncrosslinked emulsion polymer comprising, as copolymerized units, from 0% to 0.1 %, by weight of crosslinking monomers, said emulsion polymer bearing at least two reactive groups and a modifying compound bearing at least two complementary groups, wherein said modifying compound is an organic compound having number average molecular weight of 1000 or more or an oligomeric material; wherein each of said reactive groups are capable of forming a covalent bond with each of said complementary groups; wherein said reactive groups and said complementary groups are selected from the group consisting of: (a) acetoacetate-aldehyde; (b) acetoacetate-amine; (c) amine-aldehyde; (d) amine-anhydride; (e) amine-isocyanate; (f) amine-epoxy; (g) aldehyde-hydrazide; (i) carboxylic acid-epoxy; (j) carboxylic acid-carbodiimide; (k) carboxylic acid-chloro methyl ester; (1) carboxylic acid-chloro methyl amide; (m) carboxylic acid-anhydride; (n) carboxylic acid-aziridine; (o) epoxy-mercaptan; (p) isocyanate-alcohol and (q) carboxylic acid-isocyanate; wherein the first or second group in each pair may be present in said emulsion polymer or in said modifying compound;

c) applying to said polymeric coating an aqueous pressure sensitive adhesive wherein the polymeric component of the pressure sensitive layer includes, as copolymerized units, from 0% to 0.1 %, by weight of crosslinking monomers; and d) drying and curing said structure.

The structure provided by the method of the present invention includes a PVC support. Typically, the support is in the form of a sheet-like structure. The PVC support typically includes polymeric PVC, although copolymers of PVC including a predominant amount of polymerized vinyl chloride are also contemplated. The support is frequently in the form of a label, tape, film, or sheet; the support is typically a continuous, uniform thickness material although continuous structures having various thicknesses, holes, or mesh-like structures are also contemplated. The support includes from 5% to 40% by weight, based on the weight of PVC, DINCH (1,2-cyclohexane dicarboxylic acid di-isononyl ester) plasticizer. Of particular importance are plasticizers that are suitable for replacing traditional phthalate plasticizers for PVC such as, for example, dioctyl phthalate, that have been restricted for safety and regulatory reasons. Such replacement plasticizers include DINCH (1,2-cyclohexane dicarboxylic acid di-isononyl ester) plasticizers.

In the structure provided by the method of the present invention at least one of the surfaces of the PVC support has disposed thereon a crosslinked polymeric coating. The crosslinked polymeric coating is formed by applying to at least one surface of the PVC support an aqueous crosslinkable polymeric coating, the polymeric coating including a substantially uncrosslinked emulsion polymer bearing at least two reactive groups and a modifying compound bearing at least two complementary groups, wherein each of the reactive groups are capable of forming a covalent bond with each of said complementary groups. Preferred is a continuous, uniform thickness coating on the support surface. The reactive groups and their complementary groups are selected from the group consisting of : (a) acetoacetate-aldehyde; (b) acetoacetate-amine; (c) amine-aldehyde; (d) amine-anhydride; (e) amine-isocyanate; (f) amine-epoxy; (g) aldehyde-hydrazide; (i) carboxylic acid-epoxy; (j) carboxylic acid-carbodiimide; (k) carboxylic acid-chloro methyl ester; (1) carboxylic acid-chloro methyl amide; (m) carboxylic acid-anhydride; (n) carboxylic acid-aziridine; (o) epoxy-mercaptan; (p) isocyanate-alcohol and (q) carboxylic acid-isocyanate; the first or second group in each pair may be present in the emulsion polymer or in the modifying compound. The modifying compound is an organic compound having number average molecular weight of 1000 or more or an oligomeric material selected for its ability to react with the aqueous emulsion polymer. The aqueous crosslinkable coating may optionally include other components such as, for example, surfactant, pigment, and catalyst appropriate to the reaction of the reactive groups with the complementary groups. The coating may be wholly or partially dried and reacted at this stage before any subsequent coating is applied to form a crosslinked coating through the agency of heat, radiation, catalyst, and the like, or combinations thereof. Further drying and crosslinking, or curing, may be effected during or after the application of the subsequent pressure sensitive adhesive layer.

The emulsion polymer of the crosslinkable coating may be formed by the addition polymerization of ethylenically unsaturated monomers such as monoethylenically unsaturated monomers including styrene, vinyltoluene, ethylene, vinyl acetate, vinyl chloride, vinylidene chloride, acrylonitrile, (meth)acrylamide, various ($C_1$ -$C_{20}$) alkyl or ($C_3$ -$C_{20}$) alkenyl esters of (meth)acrylic acid, including methyl acrylate (MA), methyl methacrylate (MMA), ethyl (meth)acrylate, butyl (meth)acrylate, 2-hydroxyethyl (meth)acrylate, 2-ethylhexyl (meth)acrylate, benzyl (meth)acrylate, lauryl (meth)acrylate, oleyl (meth)acrylate, palmityl (meth)acrylate, and stearyl (meth)acrylate. The expression (meth)acrylic acid includes both acrylic acid and methacrylic acid. The use of the term "(meth)" followed by another term such as (meth)acrylate or (meth)acrylamide, as used throughout the disclosure, refers to both acrylates or acrylamides and methacrylates and methacrylamides, respectively. By "substantially uncrosslinked" herein is meant that the emulsion polymer of the crosslinkable coating includes, as copolymerized units, from 0% to 0.1 %, preferably 0%, by weight of crosslinking monomers such as, for example, diethylenically unsaturated monomer such as, for example allyl (meth)acrylate, vinyl (meth)acrylate, methallyl (meth)acrylate, diallyl phthalate, 1,4-butylene glycol di(meth)acrylate, 1,2-ethylene glycol di(meth)acrylate, 1,6-hexanediol di(meth)acrylate, and divinyl benzene. Low levels of adventitious crosslinking as might be engendered during the formation, storage, and handling of the emulsion polymer, however, are not precluded.

Preferably, the crosslinkable emulsion polymer is a water-based acrylic copolymer, a copolymer including a predominant amount of copolymerized (meth)acrylic esters, including from 0.8% to 6%, by weight, as copolymerized units, monomer bearing carboxylic acid or hydroxy functionality, or mixtures thereof. Typically, the modifying compound is water dispersible and includes from 0.1 to 1.0 equivalent of complementary groups, per equivalent of reactive groups.

The calculated glass transition temperature ("Tg") of the crosslinkable emulsion polymer is typically from -60 °C to +50 °C arrived at by selection of the monomers and amounts of the monomers to achieve the desired polymer Tg, as is well known in the art. Tgs of the polymers are calculated herein by using the Fox equation (T.G. Fox, Bull. Am. Physics Soc., Volume 1, Issue No. 3, page 123(1956)). that is, for calculating the Tg of a copolymer of monomers M1 and M2,

$$1/Tg(calc.) = w(M1)/Tg(M1) + w(M2)/Tg(M2)$$

, wherein

Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2,
all temperatures being in K.

The glass transition temperature of homopolymers may be found, for example, in "Polymer Handbook", edited by J. Brandrup and E.H. Immergut, Interscience Publishers. In embodiments where two or more different emulsion polymers or emulsion polymers including multiple phases such as, for example, core/shell polymers are used then the calculated Tg of the emulsion polymer shall be calculated based on the overall composition of the polymeric components.

The crosslinkable emulsion polymer particles typically have a number average diameter of from 100 nm to 1500 nm, preferably from 200 nm to 600 nm.

The crosslinked polymeric coating layer typically has a dry thickness corresponding to coverage of from 1.5 to 40 g/m$^2$. Typically, the crosslinkable polymeric coating layer is dried in an oven before applying the subsequent pressure sensitive adhesive layer. Alternatively, multilayer coating using a die or slide coater can be effected with an undried or partially dried crosslinkable polymeric coating layer.

The structure includes a substantially uncrosslinked pressure sensitive adhesive that is disposed on the crosslinked polymeric coating. By "substantially uncrosslinked" herein is meant that the polymeric component of the pressure sensitive layer includes, as copolymerized units, from 0% to 0.1 %, preferably 0%, by weight of crosslinking monomers such as, for example, diethylenically unsaturated monomer. Low levels of adventitious crosslinking as might be engendered during the formation, storage, and handling of the emulsion polymer, however, are not precluded.

Preferably, the adhesive layer is a continuous layer although discontinuous and patterned adhesive layers are also contemplated. Typically, the pressure sensitive adhesive is an aqueous emulsion polymer-based adhesive. Typically, the dry thickness of the pressure sensitive adhesive layer is from 10 to 50 g/m2. The adhesive layer may be applied to the support by conventional coating means known in the art and dried by conventional means. In one embodiment an aqueous acrylic pressure sensitive adhesive is transfer coated from siliconized paper to the crosslinked coating on the surface of the PVC support.

Additives may be incorporated into the layer compositions to confer certain performance properties. The layers may include, independently, pigment(s) such as for example, titanium dioxide, zinc oxide, calcium carbonate and silica, fillers, adjuvants such as, for example, emulsifiers, surfactants, lubricants, coalescing agents, antifreezes, curing agents, buffers, neutralizers, thickeners, rheology modifiers, humectants, wetting agents, biocides, plasticizers, antifoaming agents, UV absorbers, fluorescent brighteners, light or heat stabilizers, biocides, chelating agents, dispersants, colorants, water-repellants, and antioxidants.

The invention in some of its embodiments will now be further described by reference to the following examples:

EXAMPLES 1-2 and Comparative Example A

Crosslinkable polymeric coating :

Example 1: ROBOND™ PS8942 + 2% CR3 Coating weight was 2g/m$^2$ dry. 5 ROBOND™ PS8942 has a calculated Tg=-39°C and an acid number=8.

Example 2: RHOPLEX™ B85/RHOPLEX™ P376LO (60/40)+ 2% CR3 Coating weight was 4-6g/m$^2$ dry. RHO-PLEX™ B85 has a calculated Tg=99°C and an acid number=4. RHOPLEX™ P376LO has a calculated Tg=5°C and an acid number=25.

Comparative Example A - No crosslinkable polymeric coating
10 Drying conditions : 3 minutes at 40°C
CR-3 (The Dow Chemical Company) is a hydrophilically modified, aliphatic polyisocyanate based on hexamethylene diisocyanate, disclosed to be used as a crosslinker for aqueous acrylic polymers. 15

Pressure sensitive adhesive layer formed on top of crosslinked layer :
ROBOND™ PS8915 Coaling weight: 20g/m$^2$
Drying conditions: 2 minutes at 105°C
RHOPLEX™, ROBOND™ and CR-3 are products of The Dow Chemical Company. 20

Samples were prepared as described above on DINCH plasticized PVC (0.0162) (3 mils). Dimensions of each sample were measured with a ruler prior to aging. Samples were then placed in an oven at 70°C and dimensions were measured at the time intervals listed below. Shrinkage is reported on a percentage basis and is the average of both machine direction and 25 cross direction measurements.

Table 1.1 Shrinkage of PVC-based structures

|  | Example 1 | Example 2 | Comparative Example A |
|---|---|---|---|
| 3 Days | 0.41% | 0.48% | 0.60% |
| 1 Week | 0.73% | 0.84% | 0.95% |

Examples 1 and 2, structures of the present invention, exhibit lower shrinkage, associated with lower plasticizer migration from the plasticized PVC, relative to that of Comparative 30 Example A.

COMPARATIVE EXAMPLES B-C

Effect of crosslinking the adhesive composition. A PVC substrate including from 5% to 40% by weight, based on the weight of PVC, DINCH plasticizer was coated with a pressure sensitive adhesive, ROBOND™ PS8942 that has a calculated Tg=-39°C and an acid number=8 (Comp. Example B) or with a pressure sensitive adhesive that was crosslinked, ROBOND™ PS8942 + 2% CR3 (Comp. Example C), and each was dried/cured for 2 min. at 105 °C.

|  | Comp. Example B | Comp. Example C |
|---|---|---|
| 180° Peel adhesion from glassplate 20 min.dwell (N/inch) | 7 AF | 1 AF |

(continued)

| | Comp. Example B | Comp. Example C |
|---|---|---|
| 180° Peel adhesion from glassplate 24 hr.dwell (N/inch) | 10 AF | 4 AF |
| Shear resistance from glassplate (lin x 1 in/ 1 kg) (hrs.) | 124 CF | 144 CF |
| Note: AF - adhesive failure; CF - Cohesive failure. PSTC - Pressure Sensitive Tape Council. | | |

Peel test method: PSTC-101

Shear test method: PSTC-107

The crosslinked pressure sensitive adhesive, Comp. Example C, exhibits dramatically degraded peel adhesion, relative to the uncrosslinked analogue, Comp. Example B, demonstrating the unsuitability of a plasticizer resistant crosslinked pressure sensitive composition to function as both a barrier coat and a pressure sensitive adhesive.

**Claims**

1.  A method for providing a structure comprising:

    a) providing a polyvinyl chloride ("PVC") support, said support comprising from 5% to 40% by weight, based on the weight of PVC, DINCH (1,2-cyclohexane dicarboxylic acid di-isononyl ester) plasticizer; said support having at least one surface;
    b) applying to said surface an aqueous crosslinkable polymeric coating comprising an uncrosslinked emulsion polymer comprising, as copolymerized units, from 0% to 0.1 %, by weight of crosslinking monomers, said emulsion polymer bearing at least two reactive groups and a modifying compound bearing at least two complementary groups, wherein said modifying compound is an organic compound having number average molecular weight of 1000 or more or an oligomeric material; wherein each of said reactive groups are capable of forming a covalent bond with each of said complementary groups; wherein said reactive groups and said complementary groups are selected from the group consisting of: (a) acetoacetate-aldehyde; (b) acetoacetate-amine; (c) amine-aldehyde; (d) amine-anhydride; (e) amine-isocyanate; (f) amine-epoxy; (g) aldehyde-hydrazide; (i) carboxylic acid-epoxy; (j) carboxylic acid-carbodiimide; (k) carboxylic acid-chloro methyl ester; (1) carboxylic acid-chloro methyl amide; (m) carboxylic acid-anhydride; (n) carboxylic acid-aziridine; (o) epoxy-mercaptan; (p) isocyanate-alcohol and (q) carboxylic acid-isocyanate; wherein the first or second group in each pair may be present in said emulsion polymer or in said modifying compound;
    c) applying to said polymeric coating an aqueous pressure sensitive adhesive wherein the polymeric component of the pressure sensitive layer includes, as copolymerized units, from 0% to 0.1 %, by weight of crosslinking monomers; and
    d) drying and curing said structure.

2.  The method of claim 1 wherein said emulsion polymer is a water-based acrylic copolymer comprising a predominant amount of copolymerized (meth)acrylic esters, further comprising from 0.8% to 6%, by weight, as copolymerized units, monomer bearing carboxylic acid or hydroxy functionality, or mixtures thereof and said modifying compound is water dispersible and comprises from 0.1 to 1.0 equivalent of complementary groups per equivalent of reactive groups.

3.  The method of claim 1 or claim 2 wherein said modifying compound is a hydrophilically modified, aliphatic polyisocyanate.

**Patentansprüche**

1.  Ein Verfahren zum Bereitstellen einer Struktur, das Folgendes beinhaltet:

    a) Bereitstellen einer Polyvinylchlorid("PVC")-Stütze, wobei die Stütze, bezogen auf das Gewicht von PVC, 5 Gew.-% bis 40 Gew.-% DINCH (1,2-Cyclohexandicarbonsäure-Diisononylester)-Weichmacher beinhaltet; wobei die Stütze mindestens eine Oberfläche aufweist;

b) Aufbringen einer wässrigen vernetzbaren Polymerbeschichtung, die ein nicht vernetztes Emulsionspolymer beinhaltet, das als copolymerisierte Einheiten 0 Gew.-% bis 0,1 Gew.-% vernetzender Monomere beinhaltet, auf die Oberfläche, wobei das Emulsionspolymer mindestens zwei reaktive Gruppen und eine modifizierende Verbindung, die mindestens zwei komplementäre Gruppen trägt, trägt, wobei die modifizierende Verbindung eine organische Verbindung mit einer zahlenmittleren Molmasse von 1000 oder mehr oder ein oligomeres Material ist; wobei jede der reaktiven Gruppen eine kovalente Bindung mit jeder der komplementären Gruppen bilden kann; wobei die reaktiven Gruppen und die komplementären Gruppen aus der Gruppe ausgewählt sind, die aus Folgendem besteht: (a) Acetoacetat-Aldehyd; (b) Acetoacetat-Amin; (c) Amin-Aldehyd; (d) Amin-Anhydrid; (e) Amin-Isocyanat; (f) Amin-Epoxy; (g) Aldehyd-Hydrazid, (i) Carbonsäure-Epoxy; (j) Carbonsäure-Carbodiimid; (k) Carbonsäure-Chlormethylester; (l) Carbonsäure-Chlormethylamid; (m) Carbonsäure-Anhydrid; (n) Carbonsäure-Aziridin; (o) Epoxy-Mercaptan; (p) Isocyanatalkohol und (q) Carbonsäure-Isocyanat; wobei die erste oder zweite Gruppe in jedem Paar in dem Emulsionspolymer oder in der modifizierenden Verbindung vorhanden sein kann;

c) Aufbringen eines wässrigen Haftklebstoffs auf die Polymerbeschichtung, wobei die polymere Komponente der Haftschicht als copolymerisierte Einheiten 0 Gew.-% bis 0,1 Gew.-% vernetzende Monomere umfasst; und

d) Trocknen und Aushärten der Struktur.

**2.** Verfahren gemäß Anspruch 1, wobei das Emulsionspolymer ein wasserbasiertes Acrylatcopolymer ist, das eine überwiegende Menge an copolymerisierten (Meth)acrylestern beinhaltet, das ferner, als copolymerisierte Einheiten, 0,8 Gew.-% bis 6 Gew.-% Monomer tragende Carbonsäure oder Hydroxyfunktionalität oder Mischungen davon beinhaltet, und die modifizierende Verbindung in Wasser dispergierbar ist und 0,1 bis 1,0 Äquivalent komplementäre Gruppen pro Äquivalent reaktiver Gruppen beinhaltet.

**3.** Verfahren gemäß Anspruch 1 oder Anspruch 2, wobei die modifizierende Verbindung ein hydrophil modifiziertes, aliphatisches Polyisocyanat ist.

**Revendications**

**1.** Une méthode pour fournir une structure comprenant le fait :

a) de fournir un support en poly(chlorure de vinyle) (« PVC »), ledit support comprenant de 5 % à 40 % en poids, rapporté au poids du PVC, de plastifiant DINCH (1,2-cyclohexane dicarboxylic acid diisononyl ester, ester cyclohexane-1,2-dicarboxylate de diisononyle) ; ledit support ayant au moins une surface ;

b) d'appliquer sur ladite surface un revêtement polymérique réticulable aqueux comprenant un polymère en émulsion non réticulé comprenant, comme unités copolymérisées, de 0 % à 0,1 % en poids de monomères réticulants, ledit polymère en émulsion portant au moins deux groupes réactifs et un composé modificateur portant au moins deux groupes complémentaires, où ledit composé modificateur est un composé organique ayant une masse moléculaire moyenne en nombre de 1 000 ou plus ou un matériau oligomérique ; où chacun desdits groupes réactifs est capable de former une liaison covalente avec chacun desdits groupes complémentaires ; où lesdits groupes réactifs et lesdits groupes complémentaires sont sélectionnés dans le groupe constitué : (a) d'acétoacétate-aldéhyde ; (b) d'acétoacétate-amine ; (c) d'amine-aldéhyde ; (d) d'amine-anhydride ; (e) d'amine-isocyanate ; (f) d'amine-époxy ; (g) d'aldéhyde-hydrazide ; (i) d'acide carboxylique-époxy ; (j) d'acide carboxylique-carbodiimide ; (k) d'acide carboxylique-ester de chlorométhyle ; (l) d'acide carboxylique-amide de chlorométhyle ; (m) d'acide carboxylique-anhydride ; (n) d'acide carboxylique-aziridine ; (o) d'époxy-mercaptan ; (p) d'isocyanate-alcool et (q) d'acide carboxylique-isocyanate ; où le premier ou le deuxième groupe dans chaque paire peut être présent dans ledit polymère en émulsion ou dans ledit composé modificateur ;

c) d'appliquer sur ledit revêtement polymérique un adhésif sensible à la pression aqueux où le composant polymérique de la couche sensible à la pression inclut, comme unités copolymérisées, de 0 % à 0,1 % en poids de monomères réticulants ; et

d) de faire sécher et durcir ladite structure.

**2.** La méthode de la revendication 1 où ledit polymère en émulsion est un copolymère acrylique à base d'eau comprenant une quantité prédominante d'esters (méth)acryliques copolymérisés, comprenant en sus de 0,8 % à 6 % en poids, comme unités copolymérisées, de monomère portant une fonctionnalité acide carboxylique ou hydroxy, ou des mélanges de ceux-ci et ledit composé modificateur est dispersible dans l'eau et comprend de 0,1 à 1,0 équivalent de groupes complémentaires par équivalent de groupes réactifs.

3. La méthode de la revendication 1 ou de la revendication 2 où ledit composé modificateur est un polyisocyanate aliphatique modifié hydrophiliquement.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6995207 B
- US 5993961 A

- WO 2005039870 A

**Non-patent literature cited in the description**

- **T.G. FOX.** *Bull. Am. Physics Soc.,* 1956, vol. 1 (3), 123

- Polymer Handbook. Interscience Publishers